# EUROPEAN PATENT SPECIFICATION

(11) **EP 0 475 389 B1**
(45) Date of publication and mention of the grant of the patent: **23.08.1995**
(21) Application number: 91115388.0
(22) Date of filing: 11.09.1991
(51) Int. Cl.: B60K 11/04

(54) **Radiator support apparatus for vehicle**
Fahrzeugkühlerbefestigungsvorrichtung
Dispositif de support de radiateur de véhicule

(30) Priority: 14.09.1990 JP 245280/90; 01.08.1991 JP 192894/90
(43) Date of publication of application: 18.03.1992
(73) Proprietor: Mazda Motor Corporation, Aki-gun Hiroshima-ken (JP)
(72) Inventor: Ogawa, Soichiro, Hiroshima-shi, Hiroshima-ken (JP); Nozaki, Osamu, Naka-ku, Hiroshima-shi, Hiroshima-ken (JP); Sakata, Hideaki, Hiroshima-shi, Hiroshima-ken (JP)
(74) Representative: Reinhard - Skuhra - Weise & Partner

(56) References cited:
- DE-A- 3 521 677
- FR-A- 521 967
- US-A- 4 821 828
- PATENT ABSTRACTS OF JAPAN vol. 12, no. 57 (M-670)(2904) 20 February 1988
- PATENT ABSTRACTS OF JAPAN vol. 9, no. 152 (M-391)27 June 1985

## Description

The invention refers to a radiator support apparatus according to the preamble of claim 1, and a method of mounting a radiator.

Conventionally, as disclosed in, e.g., Japanese Patent Laid-Open No. 57-84223, in order to eliminate a so-called idling vibration or a vehicle body low-frequency vibration such as low-frequency noise caused by a variation in rotation in an engine idling state, a dynamic damper is constituted by utilizing the mass of a radiator mounted in the front end portion of a vehicle body, thereby eliminating a vertical flexural vibration in the back-and-forth direction of the vehicle body. A dynamic damper of this type is normally constituted in such a manner that the lower end portion of a radiator is attached to a vehicle body using two, i.e., right and left mount members comprising elastic members, and the upper end portion of the radiator is also attached to the vehicle body using two mount members. In this case, the upper and lower mount members are set to have a spring constant, so that the dynamic damper can provide its effect in a low-engine speed state.

The flexural vibration in the back-and-forth direction of the vehicle body normally has a vertical vibration mode which exhibits a maximum amplitude at the front end of the vehicle body. Therefore, when the dynamic damper is constituted as described above, the radiator defining the damper mass is vertically vibrated at the maximum amplitude position of the flexural vibration. For this reason, when damper characteristics are properly selected, the flexural vibration of the vehicle body in the low-engine speed state can be canceled by bouncing.

In this manner, when the vehicle body low-frequency vibration is eliminated by the dynamic damper utilizing the mass of the radiator, the vertical flexural vibration in the back-and-forth direction of the vehicle body is conventionally assumed as the vehicle body low-frequency vibration to be eliminated. However, in, e.g., a so-called FF vehicle in which heavy members are concentrated on the front end portion of the vehicle body, it is recently found that a so-called torsional vibration caused by a vertical vibration of the front end portion of the vehicle body to have the central portion in the widthwise direction of the vehicle body as a node occurs in addition to the flexural vibration in the back-and-forth direction of the vehicle body.

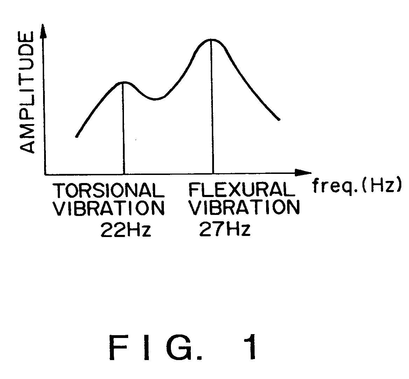

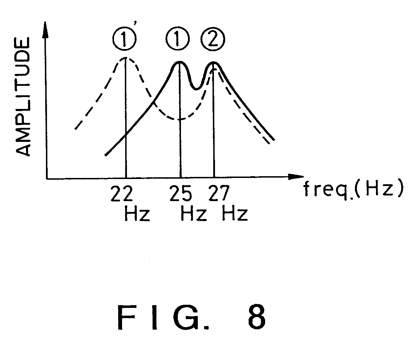

Fig. 1 shows vehicle body low-frequency vibration characteristics in an FF vehicle. In this case, as can be seen from Fig. 1, vibration peaks are present at a frequency of about 22 Hz (corresponding to an engine speed of 660 rpm) of the vehicle body vibration, and at about 27 Hz (corresponding to an engine speed of 750 rpm). The peak at 22 Hz corresponds to that of the torsional vibration, and the peak at 27 Hz corresponds to that of the flexural vibration. However, in the conventional dynamic damper, the right and left mount members at the lower end portion of the radiator have the same spring constant. For this reason, the dynamic damper characteristics are as represented by a solid curve in Fig. 8. More specifically, a pitching resonance 1 is close to a bouncing resonance 2 . Therefore, when the bouncing resonance is set at about 27 Hz so as to eliminate the flexural vibration, the pitching resonance appears at about 25 Hz, and the torsional vibration at about 22 Hz cannot be eliminated.

A radiator support apparatus according to the head portion of claim 1 is known from JP-A-62-203820. With this publication the left and right radiator supporting insulators are made of rubber, for example. The spring constants of the insulators are set within a range of 0-50 % differences. Further, properly positioning or locating the insulators with respect to a rolling axis of the radiator will accord a resonance frequency of vertical vibration with 20-40 Hz which are resonance frequencies of flexural vibration of carbody and will adjust a resonance frequency of rolling vibration of the radiator into a range of 15-25 Hz which are resonance frequencies of torsional vibration of the body. However, there is no hint how to set the constant values of the insulators, and the same is valid in view of FR-A 521967.

The present invention has been made in consideration of the above situation, and has as its object to provide a radiator support apparatus for a vehicle and a method of mounting a radiator in a vehicle, which allows a radiator to effectively serve as a dynamic damper for both a vertical flexural vibration in the back-and-forth direction of a vehicle body and a torsional vibration caused by a vibration in the widthwise direction of the vehicle body.

According to the invention this object is attained for the apparatus by features of claim 1 or for the method by features of claim 5. Further advantageous embodiments are characterized in dependent claims, respectively.

The present invention pays attention to the fact that in, e.g., an FF vehicle, a torsional vibration caused by a vertical vibration of the front end portion of a vehicle body to have a central portion in the widthwise direction of the vehicle body as a node poses a low-frequency vibration problem as well as a flexural vibration in the back-and-forth direction of the vehicle body, which vibration has been recognized as a conventional problem. Thus, according to the present inention, in a dynamic damper using a radiator as a damper mass, at least lower-end, right and left mount members are set to have different spring constants to shift a tuning point of a pitching resonance, thereby eliminating both the flexural vibration and the torsional vibration.

More specifically, in an arrangement of a radiator support apparatus for a vehicle, according to the present invention, for mounting and supporting a lower end of a radiator on a vehicle body via mount members formed of elastic members at a plurality of support positions including two side positions in a widthwise direction of the vehicle body so as to cause the radiator to serve as a dynamic damper at a front end portion of the vehicle in a low-engine speed state, the mount members located on the two side positions, in the widthwise direction of the vehicle body, of the lower end of the radiator have different spring constants, the spring constant of the mount member nearer the position of the center of gravity of the radiator being set to be smaller than a spring constant of the other mount member.

Thus, a pitching resonance point of the dynamic damper can be set to be sufficiently separated from a bounding resonance point.
Therefore, both a vertical flexural vibration in the back-and-forth direction of the vehicle body caused by bouncing, and a torsional vibration in the widthwise direction of the vehicle body caused by pitching can be eliminated at the same time. In particular, since the spring constant of the mount member closer to the center of gravity of the radiator is set to be smaller than that of the other mount member, the radiator can be set as a dynamic damper so as to eliminate both the vertical flexural vibration in the back-and-forth direction of the vehicle body, and the torsional vibration.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a graph showing vehicle body low-frequency vibration characteristics in a conventional FF vehicle;
Fig. 2 is a rear view showing an arrangement of a radiator support apparatus for a vehicle according to an embodiment of the present invention;
Fig. 3 is a partially cutaway side sectional view of a radiator shown in Fig. 2;
Fig. 4 is a schematic plan view showing an arrangement of an engine, a radiator, and the like in a vehicle of this embodiment;
Fig. 5 is a side view of the arrangement of Fig. 4;
Figs. 6(a) to 6(c) are graphs showing experimental data of idling vibration and low-frequency noise characteristics in an MT vehicle according to this embodiment;
Figs. 7(a) to 7(c) are graphs showing experimental data of idling vibration and low-frequency noise characteristics in an AT vehicle according to this embodiment;
Fig. 8 is an explanatory view for comparing dynamic damper characteristics of this embodiment with those of the prior art;
Fig. 9 is a rear view showing an arrangement of a radiator support apparatus for a vehicle according to another embodiment of the present invention; and
Figs. 10(a) to 10(c) are graphs showing experimental data of idling vibration and low-frequency noise characteristics in an AT vehicle in the embodiment shown in Fig. 9.

### DETAILED DESCRIPTION OF THE PREFERRED EMBODIMENTS

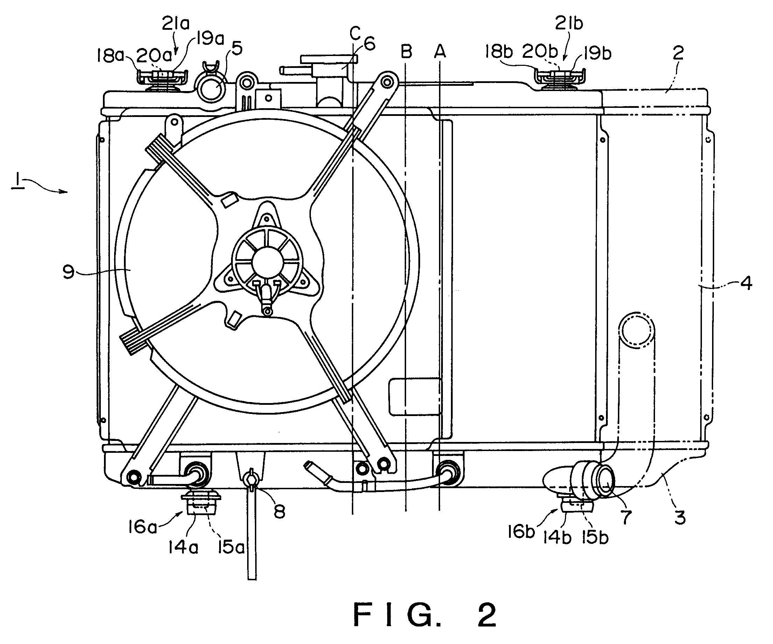

An arrangement of a radiator support apparatus for a vehicle according to an embodiment of the present invention will be described in detail below with reference to Figs. 2 to 8.

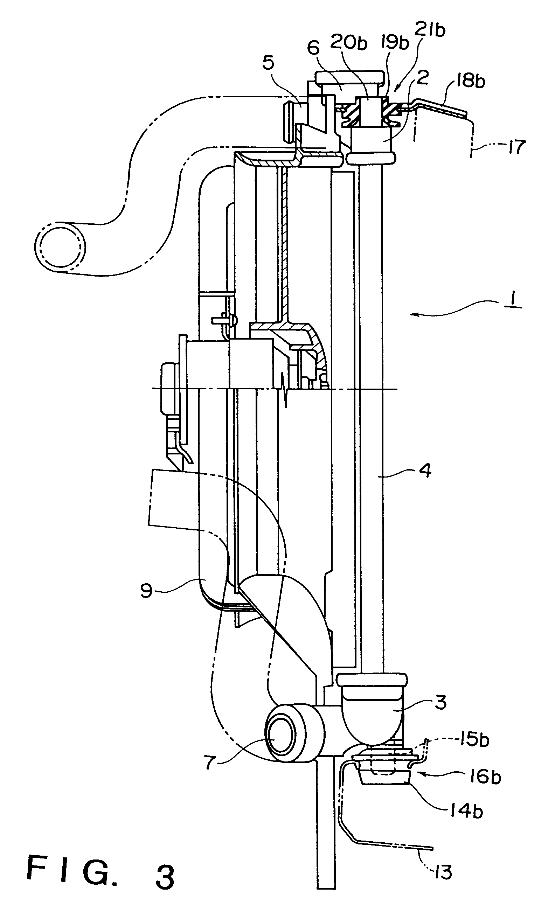

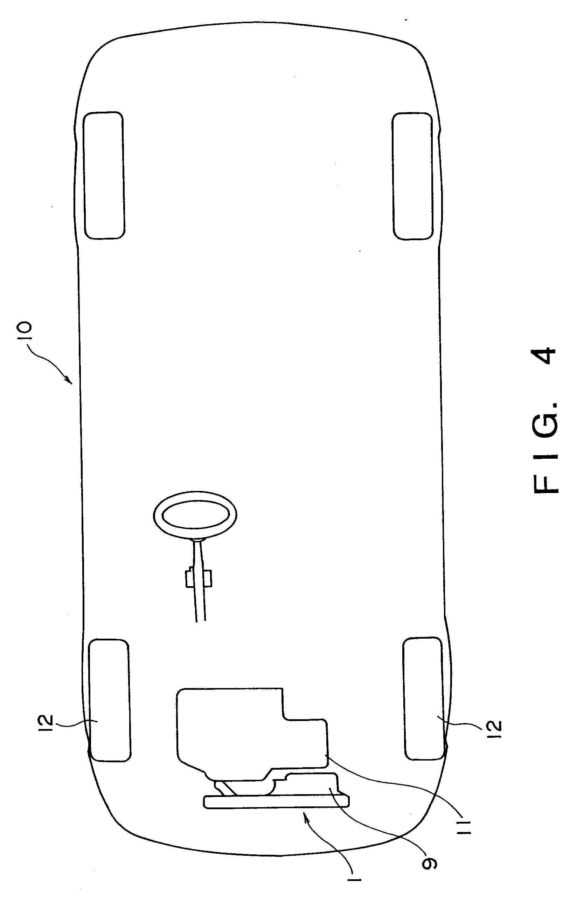

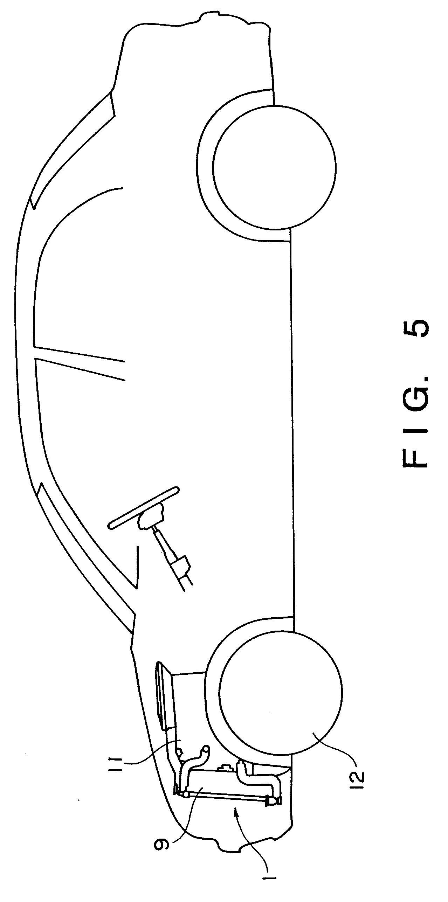

Fig. 2 is a rear view of a radiator according to the embodiment of the present invention, Fig. 3 is a partially cutaway side sectional view of the radiator, Fig. 4 is a schematic plan view of an arrangement of an engine, a radiator, and the like in a vehicle of this embodiment, and Fig. 5 is a schematic sectional view showing the arrangement of the engine, the radiator, and the like.

As shown in Figs. 2 to 5, a radiator 1 of this embodiment is mainly constituted by an upper tank 2, a lower tank 3, and a core 4 for flowing water in the upper tank 2 toward the lower tank 3. The upper tank 2 comprises a cooling water inlet port 5 and a water filler port 6 for introducing cooling water from a water jacket (not shown) of an engine. The lower tank 3 comprises a cooling water outlet port 7, and a drain cock 8. A motorized fan 9 for forcibly causing air to communicate through the core 4 is attached to the rear surface side of the radiator 1 to cover the left half portion of the core 4.

The radiator 1 is arranged in front of an engine 11 in the front end portion of a vehicle 10.

The radiator 1 is mounted on the vehicle body at two positions of each of its upper and lower ends. Right and left lower mounts 16b and 16a respectively consisting of lower mount rubbers 14b and 14a fitted in a front cross member 13 of the vehicle body, and projections 15b and 15a of the radiator 1, which are fitted in the lower mount rubbers, are arranged on the lower end of the radiator 1. Right and left upper mounts 21b and 21a respectively consisting of brackets 18b and 18a fixed to a radiator support 17, upper mount rubbers 19b and 19a respectively fitted in these brackets 18b and 18a, and projections 20b and 20a of the radiator, which are respectively fitted in these upper mount rubbers 19b and 19a are arranged on the upper end of the radiator 1.

The lower mount rubbers 14a and 14b respectively constituting the two lower mounts 16a and 16b are set, so that the left rubber (14a) when viewed from the rear surface side of the radiator 1 has a smaller spring constant than that of the right rubber (14b). More specifically, in, e.g., a vehicle (MT vehicle) comprising a manual transmission, the spring constant of the left lower mount rubber 14a is set to be 6.9 kg/mm, and the spring constant of the right lower mount rubber 14b is set to be 14.4 kg/mm. On the other hand, in a vehicle (AT vehicle) comprising an automatic transmission, the spring constant of the left lower mount rubber 14a is set to be 8.3 kg/mm, and the spring constant of the right lower mount rubber 14b is set to be 16.3 kg/mm.

Of course, these setting values are changed depending on the specifications of vehicles and the weights of radiators. Note that the radiators 1 of the MT and AT vehicles have different dimensions in the widthwise direction of the vehicle body. The radiator of the AT vehicle has a larger dimension than that of the MT vehicle in the widthwise direction of the vehicle body, as indicated by an imaginary line (alternate long and two short dashed line) in Fig. 2. The radiator 1 of the AT vehicle is arranged, so that its central line B is offset to the left from the central line A of the vehicle body in its widthwise direction. On the other hand, the radiator 1 of the MT vehicle is arranged, so that its central line C is further offset to the left from the central line B of the radiator 1 of the AT vehicle.

The motorized fan 9 is mounted on the left-side portion of the radiator 1. For this reason, the center of gravity of the radiator 1 as a whole is set at a position offset to the left from the central line A of the vehicle body in its widthwise direction (i.e., at a position between the radiator central lines B and C and the central position of the motorized fan 9 in both the AT and MT vehicles). Therefore, the left lower mount 16a is located nearer the center of gravity of the radiator 1 than the right lower mount 16b.

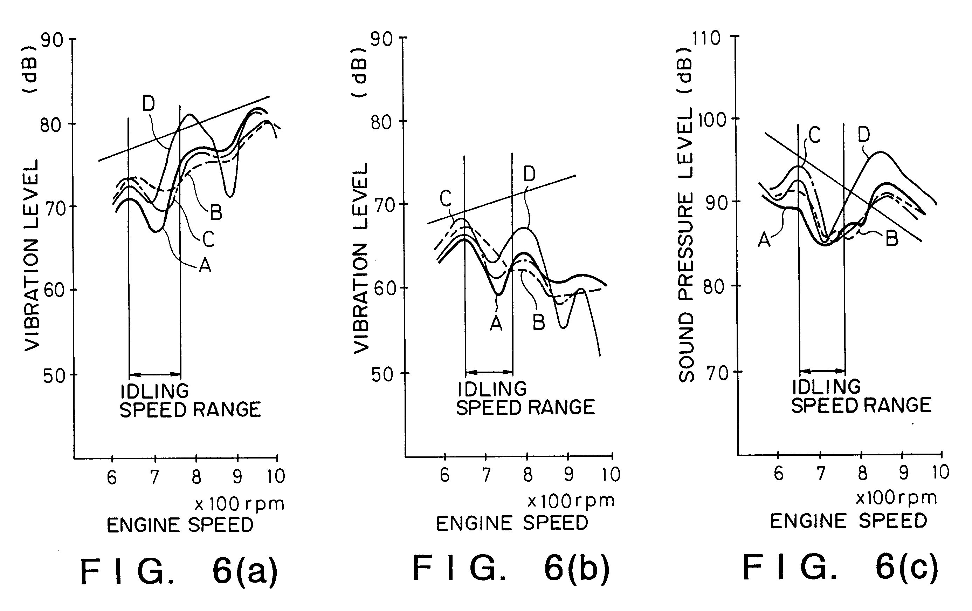

Figs. 6(a) to 6(c) show experimental data of idling vibration and low-frequency noise characteristics in an MT vehicle. Fig. 6(a) shows a steering wheel vibration level, Fig. 6(b) shows a floor vibration level, and Fig. 6(c) shows a low-frequency noise level. Note that the weight of the radiator is about 5.8 kg when the motorized fan is attached to the radiator, and cooling water is filled. In Figs. 6(a) to 6(c), solid curves A represent changes in level obtained when the spring constant of the left lower mount rubber 14a is set to be 6.9 kg/mm, and the spring constant of the right lower mount rubber 14b is set to be 14.4 kg/mm. Dotted curves B represent changes in level obtained when the spring constants of both the right and left lower mount rubbers 14b and 14a are set to be 9.3 kg/mm. Alternate long and short dashed curves C represent changes in level obtained when the spring constants of both the right and left lower mount rubbers 14b and 14a are set to be 6.9 kg/mm. Thin solid curves D represent changes in level obtained when the radiator 1 is rigidly mounted on the vehicle body without using the mount rubbers. These curves B to D show comparative examples.

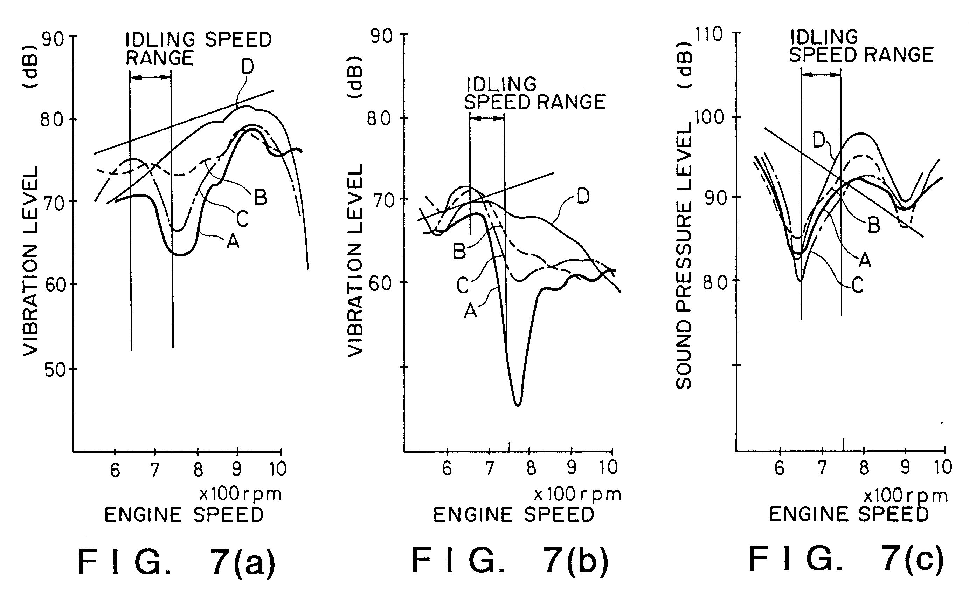

Figs. 7(a) to 7(c) show experimental data of idling vibration and low-frequency noise characteristics in an AT vehicle. Fig. 7(a) shows a steering wheel vibration level, Fig. 7(b) shows a floor vibration level, and Fig. 7(c) shows a low-frequency noise level. Note that the weight of the radiator is about 7.3 kg when the motorized fan is attached to the radiator, and cooling water is filled. In Figs. 7(a) to 7(c), solid curves A represent changes in level obtained when the spring constant of the left lower mount rubber 14a is set to be 8.3 kg/mm, and the spring constant of the right lower mount rubber 14b is set to be 16.3 kg/mm. Dotted curves B represent changes in level obtained when the spring constants of both the right and left lower mount rubbers 14b and 14a are set to be 6.9 kg/mm. Alternate long and short dashed curves C represent changes in level obtained when the spring constants of both the right and left lower mount rubbers 14b and 14a are set to be 9.3 kg/mm. Thin solid curves D represent changes in level obtained when the radiator 1 is rigidly mounted on the vehicle body without using the mount rubbers. These curves B to D show comparative examples.

As can be seen from these data, it can be confirmed that the vibration levels and sound pressure levels in an idling engine speed range (i.e., an engine speed range of 660 rpm to 750 rpm) can be reduced, when the right and left lower mount rubbers 14b and 14a are set to have different spring constants, and the spring constant of the left lower mount rubber 14a located near the center of gravity of the radiator is set to be smaller than that of the right lower mount rubber 14b.

The dynamic damper characteristics in this case are as indicated by a dotted curve in Fig. 8. More specifically, when the right and left lower mount rubbers 14b and 14a are set to have different spring constants, a pitching resonance ①' is separated from a bouncing resonance ②. As a result, the bouncing resonance can be matched with a flexural vibration peak appearing at about 27 Hz, while the pitching resonance can be matched with a torsional vibration peak appearing at about 22 Hz.

The present invention is not limited to the arrangement of the above embodiment, and various changes and modifications may be made within the spirit and scope of the invention.

For example, in the above embodiment, the spring constant of the lower mount rubber located nearer the center of gravity of the radiator 1 is set to be smaller than that of the other lower mount rubber. However, the present invention is not limited to this arrangement. For example, when the spring constant of the lower mount rubber farther from the center of gravity of the radiator may be set to be smaller than that of the other lower mount rubber, an equivalent effect can be expected. This setting is particularly effective in a vehicle in which a torsional vibration peak appears at a frequency higher than that of a flexural vibration peak.

The present invention is effective for a vehicle which has a center of gravity on the front side, and causes a torsional vibration, and can also be applied to vehicles other than an FF vehicle.

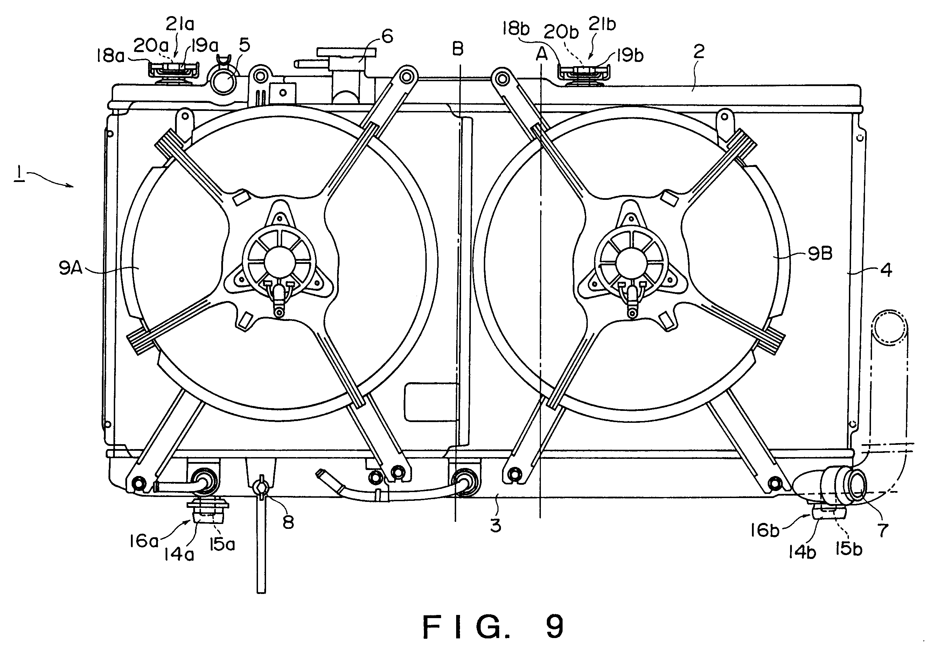

In the above embodiment, the motorized fan 9 is mounted on the left-side portion of the radiator 1. However, the present invention is not limited to this arrangement. As shown in Figs. 9 to 10(c) of another embodiment, motorized fans 9B and 9A may be arranged on the right- and left-side portions of the radiator 1.

An arrangement of a radiator support apparatus for a vehicle according to another embodiment of the present invention will be described below with reference to Figs. 9 to 10(c). Note that the same reference numerals in this embodiment denote the same parts as in the above embodiment, and a detailed description thereof will be omitted.

As has been described above, this embodiment is substantially the same as the above-mentioned embodiment, except that a pair of right and left motorized fans 9B and 9A are arranged, as shown in Fig. 9. As a result, in this embodiment, the position of the center of gravity substantially coincides with the central line D of the radiator 1 as compared to the above-mentioned embodiment. However, as has been described in the above embodiment, the central line D of the radiator 1 is set at a position offset to the left from the central line A of the vehicle body in its widthwise direction. For this reason, the problems pointed out in the prior art remain unsolved in this embodiment.

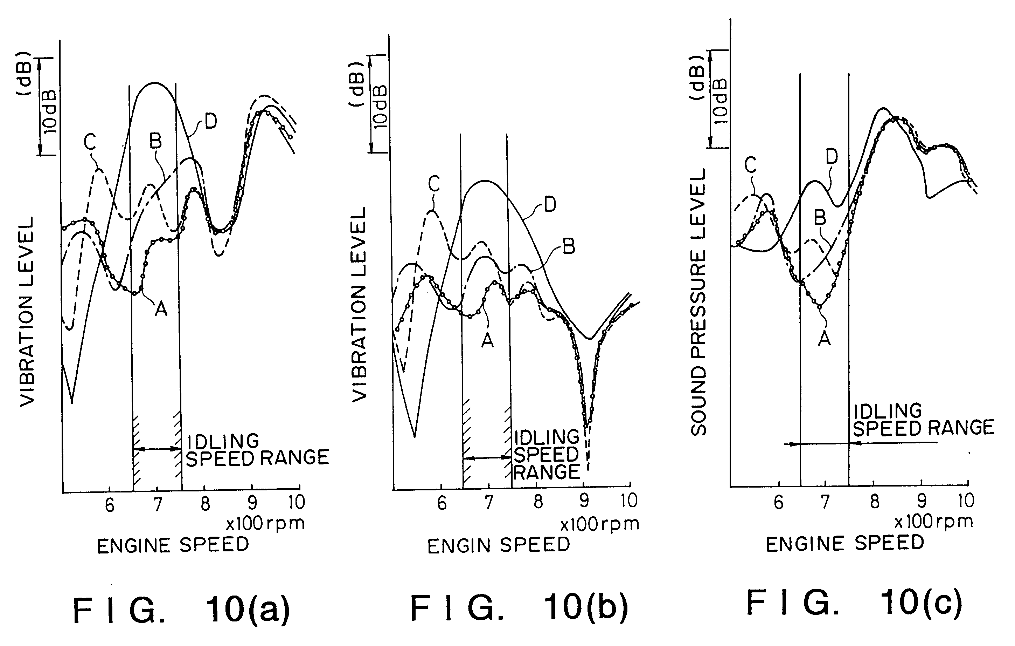

In this embodiment, an AT vehicle will be exemplified below. Figs. 10(a) to 10(c) show experimental data of idling vibration and low-frequency noise characteristics in an AT vehicle. Fig. 10(a) shows a steering wheel vibration level, Fig. 10(b) shows a floor vibration level, and Fig. 10(c) shows a low-frequency noise level. Note that the weight of the radiator is about 12 kg when the motorized fans are attached to the radiator, and cooling water is filled. In Figs. 10(a) to 10(c), solid curves A represent changes in level obtained when the spring constant of the left lower mount rubber 14a is set to be 8.9 kg/mm, and the spring constant of the right lower mount rubber 14b is set to be 10.0 kg/mm. Dotted curves B represent changes in level obtained when the spring constants of both the right and left lower mount rubbers 14b and 14a are set to be 10.0 kg/mm. Alternate long and short dashed curves C represent changes in level obtained when the spring constants of both the right and left lower mount rubbers 14b and 14a are set to be 8.9 kg/mm. Thin solid curves D represent changes in level obtained when the radiator 1 is rigidly mounted on the vehicle body without using the mount rubbers. These curves B to D show comparative examples.

As can be seen from these data, it can be confirmed that the vibration levels and sound pressure levels in an idling engine speed range (i.e., an engine speed range of 660 rpm to 750 rpm) can be reduced, when the right and left lower mount rubbers 14b and 14a are set to have different spring constants, and the spring constant of the left lower mount rubber 14a located near the center of gravity of the radiator is set to be smaller than that of the right lower mount rubber even when a pair of right and left motorized fans 9B and 9A are attached to the radiator 1.

## Claims

1. A radiator support apparatus in a manual or automatic transmission type vehicle for mounting and supporting a lower end of a radiator (1) on a vehicle body via mount members (14a, 14b) formed of elastic members located at a plurality of support positions including two side positions in a widthwise direction of the vehicle body depending on the vehicle type so as to cause said radiator (1) to serve as a dynamic damper at a front end portion of the vehicle in a low-engine speed state, said support apparatus comprising said mount members (14a, 14b) located on the two side positions in the widthwise direction of the vehicle body, which mount members are located at the lower end of said radiator (1) and have different spring constants, characterised in that one (14a) of said mount members (14a, 14b) located on the said side positions is mounted nearer a position of a center of gravity of said radiator than the other said mount member (14b) and has a smaller spring constant than the said other mount member (14b).

2. The apparatus according claim 1, characterized in that said radiator (1) is mounted on the vehicle body so that a central line (B, C) of said radiator (1) is located at a position offset in one direction from a central line (A) of the vehicle body in the widthwise direction thereof.

3. The apparatus according to claim 1, characterized in that said mount members (14a, 14b) are provided for mounting a radiator (1) having mounted thereon a motorized fan (9) at a position offset in the one direction from a central line (B, C) of said radiator (1), a position of a center of gravity of said radiator (1) as a whole including said motorized fan (9) being set at a position offset in the one direction from the central line (A) of the vehicle body in the widthwise direction thereof.

4. The apparatus according to claim 1 or 2, characterized in that said mounting members (14a, 14b) are provided for mounting a radiator (1) having mounted thereon two motorized fans (9a, 9b) at positions offset to two sides from a central line (B) of said radiator (1) along the widthwise direction of the vehicle body, a position of a center of gravity of said radiator (1) as a whole including said two motorized fans (9a, 9b) being set at a position offset in said direction from the central line (A) of the vehicle body in the widthwise direction thereof.

5. A method of mounting a radiator in a manual or automatic transmission type vehicle so that a lower end of the radiator (1) is mounted and supported on a vehicle body via mount members (14a, 14b) formed of elastic members located at a plurality of support positions including two side positions in a widthwise direction of the vehicle body depending on the vehicle type so as to cause said radiator (1) to serve as a dynamic damper at a front end portion of the vehicle in a low-engine speed state, said mount members (14a, 14b) being located on the two side positions in the widthwise direction of the vehicle body and at the lower end of said radiator (1) and having different spring constants, one (14a) of said mount members (14a, 14b) located on the said side positions being mounted nearer a position of a center of gravity of said radiator than the other said mount member (14b) and has a smaller spring constant than the said other mount member (14b), wherein
with a different mounting position depending on the type of vehicle the difference between the spring constants of said mount members (14a, 14b) is increased between vehicles, when the position of the center of gravity of said radiator (1) is separated farther from a central line (A) of the vehicle body in the widthwise direction thereof.

6. The method according to claim 5, characterized in that the spring constants of said mount members (14a, 14b) are set to have different values between a case, wherein said radiator (1) is mounted in a vehicle comprising a manual transmission, and a case wherein said radiator (1) is mounted in a vehicle comprising an automatic transmission.

7. The method according to claim 6, characterized in that a spring constant value of the mount member (14a) nearer the position of the center of gravity of said radiator (1), which value is set when said radiator (1) is mounted in the vehicle comprising the manual transmission, is set to be smaller than the spring constant, which is set, when said radiator (1) is mounted in the vehicle comprising the automatic transmission.

8. The method according to claim 6 or 7, characterized in that a spring constant value of the mount member (14b) farther from the position of the center of gravity of said radiator (1), which value is set when said radiator (1) is mounted in the vehicle comprising the manual transmission, is set to be smaller than the spring constant, which is set, when said radiator (1) is mounted in the vehicle comprising the automatic transmission.

## Patentansprüche

1. Kühler-Haltevorrichtung in einem Fahrzeug mit manuellem oder automatischem Getriebe zur Montage und Lagerung eines unteren Endes eines Kühlers (1) auf einer Fahrzeugkarosserie mittels Montageteilen (14a, 14b), welche aus elastischen Elementen gebildet sind, die sich aus zahlreichen Haltepositionen, einschließlich zweier Seitenpositionen in Breitenrichtung der Fahrzeugkarosserie in Abhängigkeit von dem Fahrzeugtyp derart befinden, daß der Kühler (1) als ein dynamischer Dämpfer an einem vorderen Endabschnitt des Fahrzeuges in einem niedrigen Motordrehzahlbereich dient, wobei zu der Haltevorrichtung die Montageteile (14a, 14b) gehören, die sich an den zwei Seitenpositionen in Breitenrichtung der Fahrzeugkarosserie befinden, und wobei sich die Montageteile an dem unteren Ende des Kühlers (1) befinden und unterschiedliche Federkonstanten aufweisen,
dadurch gekennzeichnet, daß
eins (14a) der sich an den Seitenpositionen befindlichen Montageteile (14a, 14b) näher zu einer den Schwerpunkt des Kühlers bildenden Position als das andere Montageteil (14b) angebracht ist und eine kleinere Federkonstante als das andere Montageteil (14b) aufweist.

2. **Vorrichtung** nach Anspruch 1,
dadurch gekennzeichnet, daß der Kühler (1) an der Fahrzeugkarosserie derart befestigt ist, daß eine Mittellinie (B, C) des Kühlers (1) sich in einer Lage befindet, welche in Richtung zu einer Mittellinie (A) der Fahrzeugkarosserie in Breitenrichtung versetzt liegt.

3. Vorrichtung nach Anspruch 1,
dadurch gekennzeichnet, daß die Montageteile (14a, 14b) zur Montage eines Kühlers (1) vorgesehen sind, an welchen ein motorbetriebenes Kühlluftgebläse (9) in einer Lage angebracht ist, welche in einer Richtung zu einer Mittellinie (B, C) des Kühlers (1) versetzt ist, wobei die Schwerpunktlage des Kühlers (1) als Ganzes, also einschließlich des motorbetriebenen Kühlluftgebläses (9), in einer Lage festgelegt ist, welche zu der Mittellinie (A) der Fahrzeugkarosserie in Breitenrichtung der Fahrzeugkarosserie versetzt ist.

4. Vorrichtung nach Anspruch 1 oder 2,
dadurch gekennzeichnet, daß die Montageteile (14a, 14b) zur Montage eines Kühlers (1) vorgesehen sind, an welchen zwei motorbetriebene Kühlluftgebläse (9a, 9b) in Lagen angebracht sind, die an zwei Seiten zu einer Mittellinie (B) des Kühlers (1) entlang der Breitenrichtung der Fahrzeugkarosserie versetzt sind, wobei die Schwerpunktlage des Kühlers (1) als Ganzes, also einschließlich der zwei motorbetriebenen Kühlluftgebläse (9a, 9b), in einer Lage festgelegt ist, welche zu der Mittellinie (A) der Fahrzeugkarosserie in Breitenrichtung der Fahrzeugkarosserie versetzt ist.

5. Verfahren zur Montage eines Kühlers in einem Fahrzeug mit manuellem oder automatischem Getriebe derart, daß ein unteres Ende des Kühlers (1) an einer Fahrzeugkarosserie über Montageteile (14a, 14b) montiert und gelagert wird, welche aus elastischen Elementen gebildet werden, die sich bei einer Vielzahl an Haltepositionen, einschließlich zweier Seitenpositionen in Breitenrichtung der Fahrzeugkarosserie in Abhängigkeit von dem Fahrzeugtyp derart befinden, daß der Kühler (1) als ein dynamischer Dämpfer an einem vorderen Endabschnitt des Fahrzeugs in einem niedrigen Motordrehzahlbereich dient, wobei die Montageteile (14a, 14b) sich an den zwei Seitenpositionen in Breitenrichtung der Fahrzeugkarosserie an einem unteren Ende des Kühlers (1) befinden und verschiedene Federkonstanten aufweisen, wobei eines (14a) der sich an den Seitenpositionen befindlichen Montageteile (14a, 14b) näher zu einer Schwerpunktlage des Kühlers angebracht ist, als das andere Montageteil (14b) und eine kleinere Federkonstante als das andere Montageteil (14b) aufweist, wobei mit einer unterschiedlichen Halteposition in Abhängigkeit von dem Fahrzeugtyp der Unterschied zwischen den Federkonstanten der Montageteile (14a, 14b) zwischen den Fahrzeugen erhöht wird, wenn die Lage des Schwerpunktes des Kühlers (1) von einer Mittellinie (A) der Fahrzeugkarosserie in Breitenrichtung der Fahrzeugkarosserie weiter entfernt wird.

6. Verfahren nach Anspuch 5,
dadurch gekennzeichnet, daß die Federkonstanten der Montageteile (14a, 14b) so festgelegt werden, daß sie für einen Fall, bei dem der Kühler (1) in einem Fahrzeug mit manuellem Getriebe angebracht wird, und für einen Fall, bei dem der Kühler (1) in einem Fahrzeug mit automatischem Getriebe angebracht wird, unterschiedliche Werte aufweisen.

7. Verfahren nach Anspruch 6,
dadurch gekennzeichnet, daß ein Federkonstantenwert, der festgelegt wird, wenn der Kühler (1) in das Fahrzeug mit manuellem Getriebe montiert wird, von demjenigen Montageteil (14a), welches sich näher zu der Lage des Schwerpunktes des Kühlers (1) befindet, kleiner als die Federkonstante eingestellt wird, welche festgelegt wird, wenn der Kühler (1) in das Fahrzeug mit automatischem Getriebe eingebaut wird.

8. Verfahren nach Anspruch 6 oder 7,
dadurch gekennzeichnet, daß ein Federkonstantenwert, der festgelegt wird, wenn der Kühler (1) in das Fahrzeug mit manuellem Getriebe montiert wird, von demjenigen Montageteil (14b), welches von der Lage des Schwerpunktes des Kühlers (1) entfernter befindet, kleiner als die Federkonstante eingestellt wird, welche festgelegt wird, wenn der Kühler (1) in das Fahrzeug mit automatischem Getriebe eingebaut wird.

## Revendications

1. Dispositif de support de radiateur dans un véhicule du type à transmission manuelle ou automatique destiné au montage et au support d'une extrémité inférieure d'un radiateur (1) sur une carrosserie de véhicule par l'intermédiaire d'éléments de montage (14a, 14b) constitués d'éléments élastiques placés à une pluralité de positions de support comprenant deux positions latérales dans une direction de la largeur de la carrosserie de véhicule en fonction du type de véhicule de manière à faire servir ledit radiateur (1) d'amortisseur dynamique à une partie d'extrémité avant du véhicule dans un état de faible vitesse du moteur, ledit dispositif de support comprenant lesdits éléments de montage (14a, 14b) placés aux deux positions latérales, dans la direction de la largeur de la carrosserie de véhicule, lesdits éléments de montage étant placés à l'extrémité inférieure dudit radiateur (1) et présentant des constantes de rappel différentes, caractérisé en ce que l'un (14a) desdits éléments de montage (14a, 14b) placés auxdites positions latérales est monté en étant plus proche d'une position d'un centre de gravité dudit radiateur que l'autre (14b) desdits éléments de montage et présente une constante de rappel plus faible que l'autre (14b) desdits éléments de montage.

2. Dispositif selon la revendication 1, caractérisé en ce que ledit radiateur (1) est monté sur la carrosserie de véhicule de telle manière qu'une ligne médiane (B, C) dudit radiateur (1) est disposée à une position décalée dans une direction à partir d'une ligne médiane (A) de la carrosserie de véhicule dans la direction de sa largeur.

3. Dispositif selon la revendication 1, caractérisé en ce que lesdits éléments de montage (14a, 14b) sont prévus pour le montage d'un radiateur (1) sur lequel est monté un ventilateur (9) motorisé à une position décalée dans une direction à partir d'une ligne médiane (B, C) dudit radiateur (1), une position d'un centre de gravité dudit radiateur (1) dans son ensemble incluant ledit ventilateur (9) motorisé étant réglée à une position décalée dans ladite une direction à partir d'une ligne médiane (A) de la carrosserie de véhicule dans la direction de sa largeur.

4. Dispositif selon l'une des revendications 1 ou 2, caractérisé en ce que lesdits éléments de montage (14a, 14b) sont prévus pour le montage d'un radiateur (1) sur lequel sont montés deux ventilateurs (9A, 9B) motorisés à des positions décalées des deux côtés d'une ligne médiane (B) dudit radiateur (1) le long de la direction de la largeur de la carrosserie de véhicule, une position d'un centre de gravité dudit radiateur (1) dans son ensemble incluant lesdits deux ventilateurs (9A, 9B) motorisés étant réglée à une position décalée dans ladite direction à partir de la ligne médiane (A) de la carrosserie de véhicule dans la direction de sa largeur.

5. Procédé de montage d'un radiateur dans un véhicule du type à transmission manuelle ou automatique de telle manière qu'une extrémité inférieure du radiateur (1) est montée et supportée sur une carrosserie de véhicule par l'intermédiaire d'éléments de montage (14a, 14b) constitués d'éléments élastiques placés à une pluralité de positions de support comprenant deux positions latérales dans une direction de la largeur de la carrosserie de véhicule en fonction du type de véhicule de manière à faire servir ledit radiateur (1) d'amortisseur dynamique à une partie d'extrémité avant du véhicule dans un état de faible vitesse du moteur, lesdits éléments de montage (14a, 14b) étant placés aux deux positions latérales, dans la direction de la largeur de la carrosserie de véhicule et à l'extrémité inférieure dudit radiateur (1) et présentant des constantes de rappel différentes, l'un (14a) desdits éléments de montage (14a, 14b) placés auxdites positions latérales étant monté en étant plus proche d'une position d'un centre de gravité dudit radiateur que l'autre (14b) desdits éléments de montage et présentant une constante de rappel plus faible que l'autre (14b) desdits éléments de montage, dans lequel, avec une position de montage différente en fonction du type de véhicule, la différence entre les constantes de rappel desdits éléments de montage (14a, 14b) est augmentée entre des véhicules, quand la position du centre de gravité dudit radiateur (1) est séparée en étant plus loin d'une ligne médiane (A) de la carrosserie de véhicule dans la direction de sa largeur.

6. Procédé selon la revendication 5, caractérisé en ce que les constantes de rappel desdits éléments de montage (14a, 14b) sont réglées pour présenter différentes valeurs entre un cas où ledit radiateur (1) est monté dans un véhicule comportant une transmission manuelle et un cas où ledit radiateur (1) est monté dans un véhicule comportant une transmission automatique.

7. Procédé selon la revendication 6, caractérisé en ce qu'une valeur de la constante de rappel de l'élément de montage (14a) le plus proche de la position du centre de gravité dudit radiateur (1), ladite valeur étant réglée quand ledit radiateur (1) est monté sur le véhicule comportant la transmission manuelle, est réglée pour être plus faible que la constante de rappel qui est réglée quand ledit radiateur (1) est monté sur le véhicule comportant la transmission automatique.

8. Procédé selon l'une des revendications 6 ou 7, caractérisé en ce qu'une valeur de la constante de rappel de l'élément de montage (14a) le plus loin de la position du centre de gravité dudit radiateur (1), ladite valeur étant réglée quand ledit radiateur (1) est monté sur le véhicule comportant la transmission manuelle, est réglée pour être plus faible que la constante de rappel qui est réglée quand ledit radiateur (1) est monté sur le véhicule comportant la transmission automatique.
